# EUROPEAN PATENT APPLICATION

(11) **EP 2 541 711 A2**
(43) Date of publication of application: **02.01.2013**
(21) Application number: 12382228.0
(22) Date of filing: 04.06.2012
(51) Int. Cl.: H02G 7/14

(54) **Vibration damper for an aerial electrical conductor**

(30) Priority: 01.07.2011 ES 201131123
(71) Applicant: SBI Connectors España, S.A., 08635 Sant Esteve Sesrovires (ES)
(72) Inventor: Rodriguez Lopez, Albert, 08635 SANT ESTEVE SES ROVIRES (ES); Sanllehi Muñoz, Josep, 08635 SANT ESTEVE SESROVIRES (ES)
(74) Representative: Sugrañes Patentes y Marcas

(57) **Abstract**

The present invention relates to a vibration damper applicable to an aerial cable or conductor, formed by a framework capable of adopting a tubular shape in an operating position, for wrapping tightly around a longitudinal portion of the mentioned cable or conductor, comprising at least one clamp which can be fitted outside the cable or conductor serving as a support for a plurality of bars regularly spaced from one another and arranged in an axial direction.

## Description

### Technical Field of the Invention

The invention relates to a damper intended to be assembled on an aerial conductor for reducing the vibrations generated by wind when crossing the mentioned conductor. The damper of the invention is particularly suitable to be assembled on a tubular conductor of those which are used as voltage transmission means in an electrical sub-station, commonly referred to as bus.

### Background of the Invention

An electrical sub-station is an installation intended for modifying and establishing voltage levels of an electrical infrastructure in order to facilitate transporting and distributing electrical energy. _With their main equipment being a transformer or transformers, sub-stations use tubular conductors, or buses or bus bar, generally formed by a combination of copper or aluminium, and silver and other materials serving to transmit the voltage between the switching and protection elements of the sub-station. These conductors can be considered as a continuous beam with supports which are moveable on the isolators, possible articulations in the beam, which can reach lengths up to 40 m long.

Light wind is known to cause vibrations due to the Von Karman swirls which with certain wind speed create mechanical resonance conditions which can cause damage due to fatigue in the installation, damping these effects is therefore necessary.

The presence of Von Karman swirls which are also known in the literature as Von Karman whirlwinds, can be seen for example when a motionless obstacle, such as an aerial cable or conductor, passively opposes the air flow that impinges it. In specific conditions a family of cyclonic and anti-cyclonic vortices leeward to the obstacle, extending downstream from the obstacle are formed. As the obstacle is moved further away, the vortices grow in spatial dimension while they dissipate or weaken at the same time until they disappear. In specific occasions the whirlwinds located in two opposite lines or lanes can interact with each other and in practice they create disturbances in the wind field causing mechanical vibrations in the obstacle, in this case the aerial cable or conductor.

For the purpose of preventing these disturbances in the air from undesirably transmitting vibration movements to the aerial cables or conductors, vibration damper which are secured to the cable or conductor along same are used. These dampers generally comprise a clip for attaching to the conductor to which clip there are firmly secured one or two counterweights, the weight and configuration of which will determine their damping efficiency in their own resonance frequencies.

An objective of the present invention is a damper alternative to those already known. Another objective of the invention is a damper of easy installation which cannot be manipulated unlike the dampers described above, generally prepared so that the counterweights can be moved and optionally arranged in a symmetrical or non symmetrical configuration, for the purpose of altering the response thereof depending on whether it is placed on a cable of greater or lesser diameter, at its end or in its central portion, etc., which may cause one and the same damper to not fulfil its function as it does not have the configuration which would correspond it with the parameters of the cable or conductor on which it must be assembled.

### Disclosure of the Invention

In essence, the inventors have found that an alternative way to proceed is to prevent the formation of Von Karman swirls instead of to somehow compensate the effects they caused on the cable or conductor. In summary the solution is not based on providing the cable or conductor with the ideal counterweights for reducing vibrations caused by the air as it passes through but preventing the passage of air from triggering the effect that causes the very vibrations.

The damper of the invention reduces or prevents the formation of Von Karman swirls when it is correctly assembled or installed on an aerial cable or conductor and especially on a tubular conductor or a bus bar of an electrical sub-station.

This damper is formed by a framework capable of adopting an operating position in tubular shape, for wrapping tightly around a longitudinal portion of the mentioned cable or conductor, and comprising at least one clamp which can be fitted outside the cable or conductor serving as a support for a plurality of bars regularly spaced from one another and arranged in an axial direction.

In a variant of the invention, the bars extend parallel to one another and have circular cross-section.

According to one embodiment, the framework comprises two clamps which can be fitted outside the cable or conductor between which the mentioned bars extend and are secured.

According to another feature of the invention, in the operating position of the framework the bars are arranged externally tangent to respective generatrices of an imaginary outer cylinder of radius R, the relation R>r being fulfilled, r being the inner radius of the clamp or clamps, whereby upon wrapping the framework tightly around the cable or conductor the bars do not contact the outer surface thereof.

The values of R and r preferably follow the following relation 5 mm < (*R*-*r*) < 500 mm

The number of bars n is preferably comprised between 5 and 200; and the diameter D of the bars is comprised between 2 and 200 mm.

According to another feature of the invention, the framework is made up of an electrical conducting material; and the length L of the framework is comprised between 0.5 m and 50 m.

According to a variant of the invention, the framework is formed by two separable semi-cylindrical halves, each of which comprises one half of the clamp or clamps and the bars which are supported thereon, provided with corresponding and complementary mutual coupling means allowing the framework to adopt a tubular shape in the mentioned operating position.

The framework is alternatively formed by two semi-cylindrical halves attached to one another in a hinged manner allowing the framework to adopt a tubular shape in the mentioned operating position.

According to another aspect of the invention, an electrical installation comprising a tubular aerial conductor to which there is coupled at least one vibration damper according to the invention is also claimed.

### Brief Description of the Drawings

Figure 1 is a side view of the vibration damper according to a variant of the invention in its operating position, the framework making it up being assembled on a conductor;
Figure 2 is a perspective view of the vibration damper of Figure 1;
Figure 3 is a cross-section view according to plane of section AA of Figure 1;
Figures 4 to 13 are respective schematic cross-section views of different embodiments for a framework of the damper according to the invention;
Figure 14 shows a clamp of the framework for an alternative variant of the invention; and
Figure 15 is a side view of a damper according to another embodiment variant provided with a single clamp.

### Detailed Description of Embodiment Variants

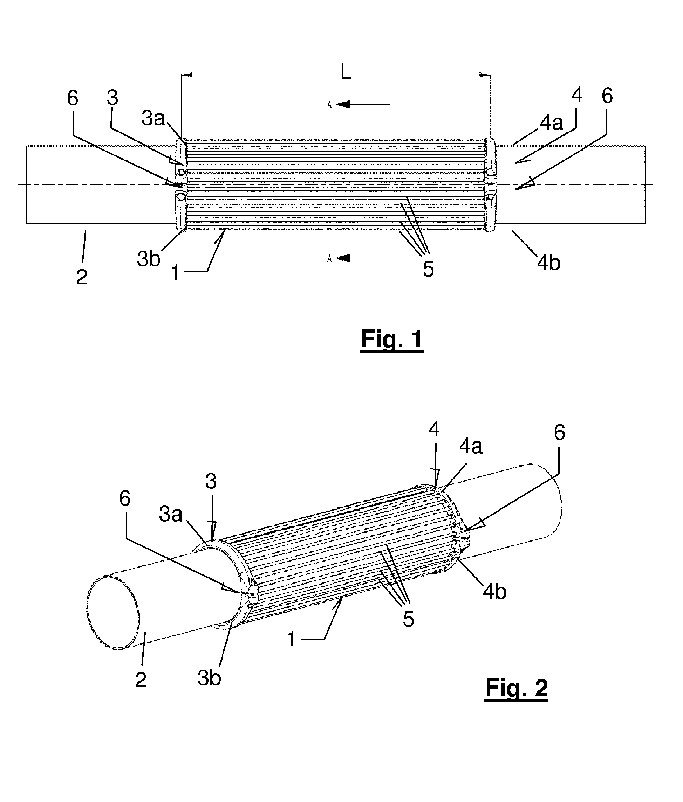

The example of Figures 1 and 2 shows a vibration damper according to a first variant of the invention in the operating position thereof. In Figures 1 and 2 the damper is formed by a framework 1 which adopts a tubular shape and which wraps tightly outside a longitudinal section of a tubular conductor 2.

It is observed that the framework 1 comprises two clamps 3 and 4 which can be fitted outside the conductor, as will be explained in greater detail below, serving as a support for a plurality of bars 5 having circular cross-section, arranged regularly spaced from one another and extending in the axial direction.

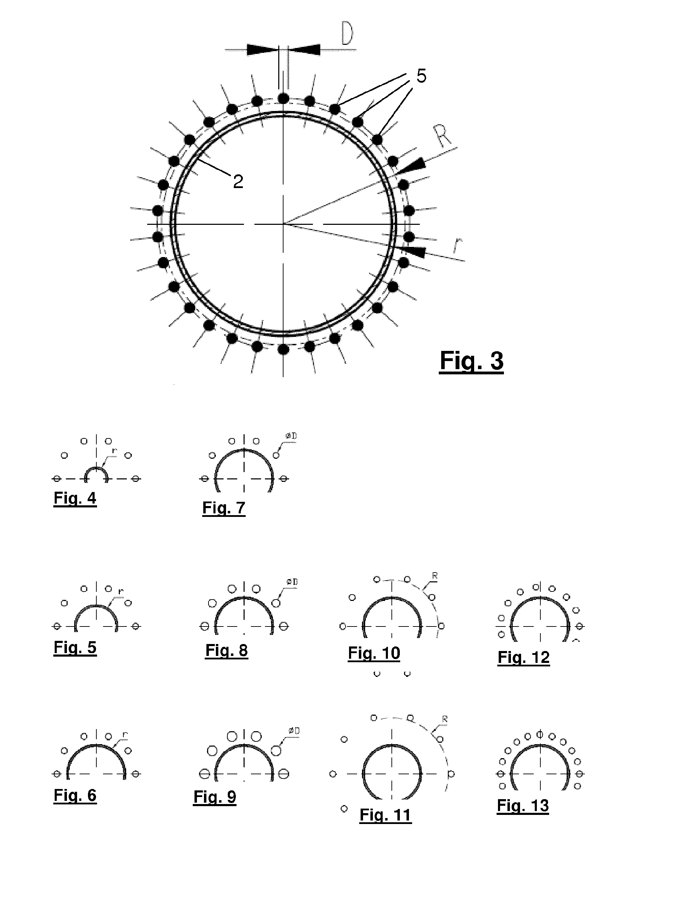

As seen in Figure 3, the bars 5 are arranged externally tangent to respective generatrices of an imaginary outer cylinder the radius R of which is greater than the inner radius r of clamps 3 and 4, whereby upon wrapping the framework 1 tightly on the conductor 2 the bars 5 do not contact the outer surface thereof. Therefore, the air can flow between the bars 5 and more specifically between the latter and the outer surface of the conductor 2. This effect breaks the path lines which in normal conditions creates air flow upon crossing a circular sector, such as that of conductor 2, and causes a variation in the lift coefficient thereof which in turn causes a fluctuation in said lift force and which in practice, together with the Von Karman effect, generates vibrations in the aerial conductors. In summary, providing a plurality of bars 5 around the conductor 2, separated at a predetermined distance from its outer surface advantageously alters the path lines of the air, significantly eliminating or reducing the production of Von Karman swirls and consequently effectively minimizing the vibrations to which the conductor 2 is subjected to.

Although in the embodiment depicted in Figures 1 to 3, applicable to a conductor 2 with outer radius r of 125 mm, the number of bars is n= 30 mm; the value of its diameter is D= %%mm; and the value of the radius R is 135 mm, which means that the bars 5 are arranged at an approximate distance of 10 mm from the outer surface of the conductor 2 when the framework 1 is placed around the mentioned conductor 2 such as shown in Figures 1 and 2, naturally many other embodiment variants are contemplated.

The tests performed demonstrate that depending on the radius r of the conductor more than one ideal combination for the values of R, D and n can be selected. In other words and by way of example, the selection of a specific number of bars 5 n determine the value of the parameters R and D ideal for a conductor 2 of radius r, and the contrary. Finding the suitable selection for each case requires putting a simple trial and error programme into practice, other external parameters characteristic of the installation itself such as for example the mean speed of the wind blowing in the specific location of the installation must be taken into account, they also determine the parameterisation of the framework 1 ideal for each case.

Figures 4 to 12 show different proportions contemplated by the invention for the parameters involved in designing a framework 1 such as that of the invention, in each case the central circle representing the cross-section of the conductor 2 and the peripheral circles the cross-section of the bars 5.

For the purpose of installing or assembling the framework 1 on a conductor 2, in the variant of Figures 1 and 2 the framework 1 is formed by two separable halves 1a and 1b, both semi-cylindrical, of which the first half 1a is made up of the halves 3a and 4a of the annular clamps 3 and 4, together with the bars 5 which are supported thereon, whereas the second half 1b is made up of the halves 3b and 4b of the mentioned annular clamps 3 and 4, together with the bars 5 which they support. It is observed that both halves 1a and 1b of the framework 1 are provided with corresponding and complementary mutual coupling means 6 which allow assembling the framework 1 to adopt the tubular shape depicted in the mentioned Figures 1 and 2.

The coupling means 6 can adopt any known shape, the example depicting mechanical type coupling means 6 consisting of respective tabs provided at the ends of each half 3a, 3b and 4a, 4b of the clamps, and provided with a through hole for the mutual coupling thereof with a homologous tab by means of screws, rivets or the like.

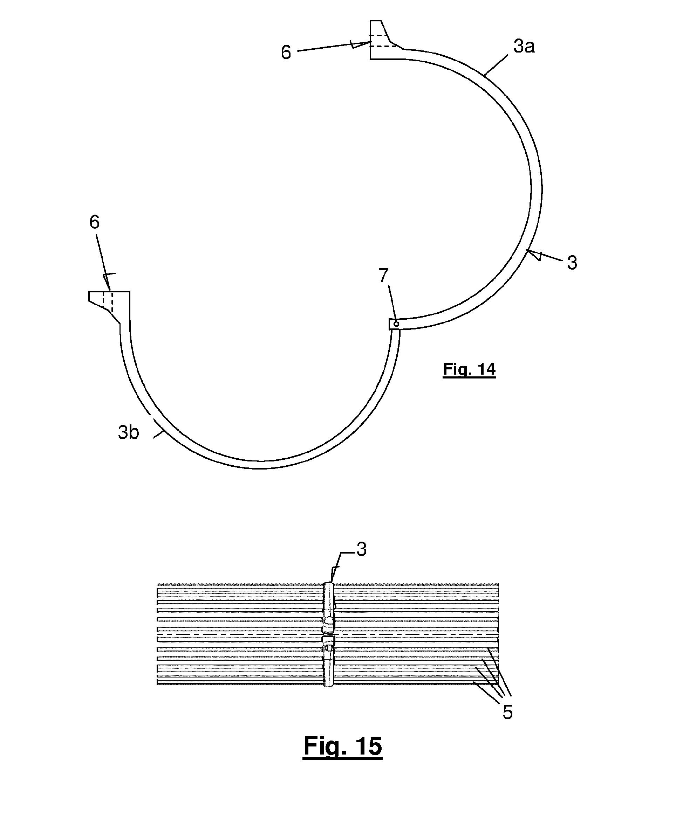

It is envisaged that the two semi-cylindrical halves 1a and 1b of the framework 1 are alternatively connected to one another in a hinged manner, as schematically illustrated in Figure 14. This figure shows a clamp 3 of the framework 1 in an open position, suitable for inserting the conductor, which will subsequently be closed by pivoting one of the two halves 3a or 3b, or by pivoting both simultaneously, about the axis of rotation of the hinge 7. In this alternative the free ends of the two halves 3a and 3b of the clamp 3 are also provided with respective tabs with through holes, which will be axially aligned when the clamp 3 adopts its operating position allowing an adjusting screw to pass through it.

## Claims

1. A vibration damper applicable to an aerial cable or conductor, **characterised in that** it is formed by a framework (1) capable of adopting a tubular shape in an operating position for wrapping tightly around a longitudinal portion of the mentioned cable or conductor (2), and comprising at least one clamp (3, 4) which can be fitted outside the cable or conductor serving as a support for a plurality of bars (5) regularly spaced from one another and arranged in an axial direction.

2. The vibration damper according to the claim 1, **characterised in that** the bars (5) extend parallel to one another and have circular cross-section.

3. The vibration damper according to any one of claims 1 or 2, **characterised in that** it comprises two clamps which can be fitted outside the cable or conductor between which the mentioned bars (5) extend and are secured.

4. The vibration damper according to the preceding claim, **characterised in that** in the operating position of the framework (1) the bars (5) are arranged externally tangent to respective generatrices of an imaginary outer cylinder of radius R, the relation R>r being fulfilled, r being the inner radius of the clamp or clamps (3, 4), whereby upon wrapping the framework tightly around the cable or conductor the bars do not contact the outer surface thereof.

5. The vibration damper according to the preceding claim, **characterised in that** the values of *R* and *r* follow the following relation 5 mm < (*R-r*) < 500 mm

6. The vibration damper according to any one of claims 2 to 6, **characterised in that** the number n of bars (5) is comprised between 5 and 200; and the diameter d of the bars (5) is comprised between 2 and 200 mm.

7. The vibration damper according to any one of the preceding claims, **characterised in that** the framework (1) is made up of an electrical conducting material.

8. The vibration damper according to any one of the preceding claims, **characterised in that** the length L of the framework (1) is comprised between 0.5 m and 50 m.

9. The vibration damper according to any one of the preceding claims, **characterised in that** the framework (1) is formed by two separable semi-cylindrical halves (1a, 1b), each of which comprises one half (3a and 4a; 3b and 4b) of the clamp or clamps (3, 4) and the bars (5) which are supported thereon, provided with corresponding and complementary mutual coupling means (6) which allow assembling the framework (1) for it to adopt the tubular shape in its operating position.

10. The vibration damper according to any one of claims 1 to 9, **characterised in that** the framework (1) is formed by two semi-cylindrical halves (1a, 1b) attached to one another in a hinged manner, each of which comprises one half (3a and 4a; 3b and 4b) of the clamp or clamps and the bars (5) which are supported thereon, provided with corresponding and complementary mutual coupling means (6) which allow assembling the framework (1) for it to adopt the tubular shape in its operating position.

11. An electrical installation comprising a tubular aerial conductor, **characterised in that** at least one vibration damper according to any one of claims 1 to 10 is coupled to the mentioned conductor.
